# EUROPEAN PATENT SPECIFICATION

(11) **EP 3 318 357 B1**
(45) Date of publication and mention of the grant of the patent: **29.06.2022**
(21) Application number: 16197337.5
(22) Date of filing: 04.11.2016
(51) Int. Cl.: B23D 47/10, B27G 19/02

(54) **CUTTING MACHINE TOOL COMPRISING A SAFETY APPARATUS**
SCHNEIDENDE WERKZEUGMASCHINE MIT EINER SICHERHEITSVORRICHTUNG
MACHINE-OUTIL DE COUPE COMPRENANT UN APPAREIL DE SÉCURITÉ

(43) Date of publication of application: 09.05.2018
(73) Proprietor: Griggio S.r.l. in liquidazione, 35011 Campodarsego (Padova), Frazione Reschigliano (IT); SawStop Holding LLC, Tualatin, OR 97062 (US)
(72) Inventor: GRIGGIO, Giovanni, 35011 CAMPODARSEGO PD (IT); GRIGGIO, Ettore Ennio, 35010 CADONEGHE PD (IT); GRIGGIO, Paolo, 35139 PADOVA (IT); GRIGGIO, Massimo, 35139 PADOVA (IT)
(74) Representative: Modiano, Micaela Nadia

(56) References cited:
- FR-A- 1 538 617
- US-A1- 2004 159 198
- US-A1- 2006 032 352

## Description

The present invention relates to a cutting machine tool as per the preamble of claim 1.

Although the invention is described below for machine tools for cutting wood, it can also be used for other, similar machines for which it is necessary to ensure safety for the operator by way of the retraction of the cutting tool.

Nowadays in the sector of cutting wood, many and varied types of machines are known which have a circular blade that rotates about its own axis and which partially protrudes from the worktable on which the pieces to be cut are moved with respect to the blade.

In the sector the need is particularly felt to ensure a good level of safety for users who can accidentally come into contact with the blade, in particular with the hands.

For this reason, nowadays cutting devices have been offered that comprise worktables with a rotating blade that is adapted to translate upward and downward as needed, coupled to a detection system that can detect contact between a person and the blade and in such case impose the lowering thereof.

According to one of these solutions, a crank is coupled with one end to the frame of the machine and is pivoted with the other end on the center of rotation of the rotating blade. With its rotation, the crank lowers and lifts the blade, and this movement is guided by way of a tilting cylinder in which a stem is adapted to slide, with a piston, directly coupled with the end thereof to the center of rotation of the blade.

The crank and the stem are fixed-length and therefore, in order to allow the rotation of the crank in lowering the blade, therefore combining the translation of the stem and the rotation of the crank, the cylinder must be tilting.

This solution is not devoid of drawbacks, including first of all the fact that during the movement of the piston in the cylinder, in the lowering retraction of the blade, a quantity of energy is necessary in order to rotate the tilting cylinder, and this requires a greater buildup of pressure energy and therefore a higher pressure inside the accumulation chamber. This entails in turn a greater stress on the internal members of the cylinder.

Furthermore, it is not negligible that, owing to the rotation of the tilting cylinder, the stem is necessarily subjected to stresses that damage it, since it has to follow the rotation of the cylinder.

FR1538617 discloses a cutting machine tool as per the preamble of claim 1.

The aim of the present invention is to provide a safety apparatus for a cutting machine tool that is capable of ensuring adequate levels of safety by way of the lowering of the rotating blade in the event of contact with the body of the operator, without incurring the above mentioned drawbacks.

Within this aim, an object of the invention is to provide an apparatus that lasts longer over time with respect to conventional apparatuses.

This aim and this and other objects which will become better evident hereinafter are achieved by a cutting machine tool comprising the combination of features of claim 1.

Further characteristics and advantages of the invention will become better apparent from the description of a preferred, but not exclusive, embodiment of the apparatus according to the invention, which is illustrated by way of non-limiting example in the accompanying drawings wherein:
- Figure 1 is a perspective view of the apparatus according to the invention in the operating configuration;
- Figure 2 is a perspective view of the apparatus according to the invention in the safe configuration;
- Figure 3 is a cross-section of the apparatus according to the invention.

With reference to the figures, the safety apparatus is generally designated with the reference numeral 10.

The safety apparatus 10 is comprised by a cutting machine tool, of the type comprising a frame 11 that supports a worktable 12 on which the pieces being machined are cut and in particular as illustrated, but not exclusively, of the type with a circular saw. The machine also comprises a cutting tool 13, of the rotating circular saw blade type, with its own supporting structure 14 coupled to the frame 11.

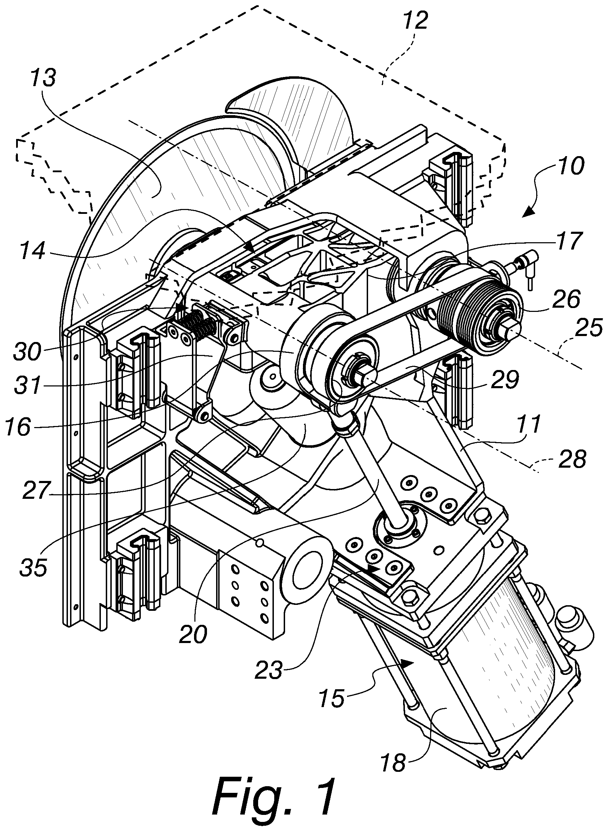

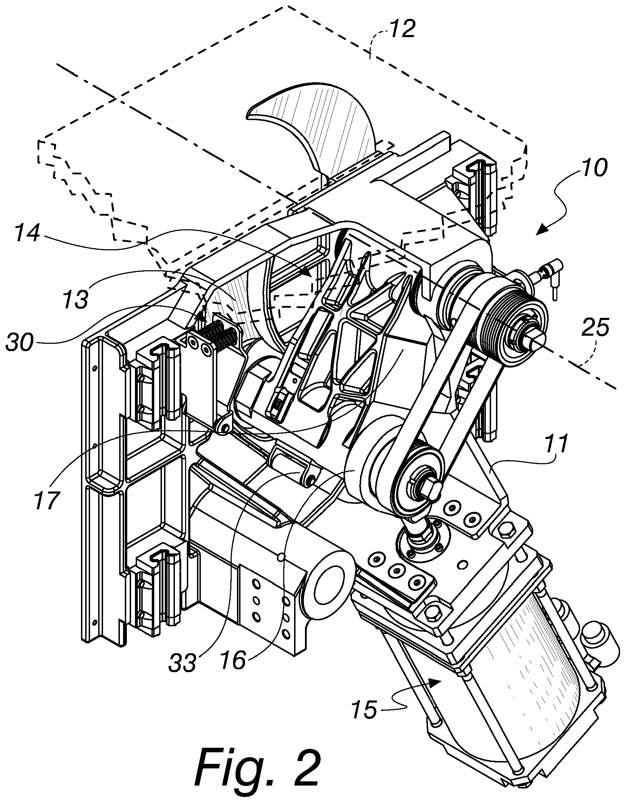

The apparatus 10 comprises an actuator 15 controlled by control means for moving the supporting structure 14, which is adapted to guide the cutting tool 13 from an operating configuration of the machine, for which it protrudes from the worktable 12, as shown in Figure 1, to a safe configuration by retracting it with respect to the worktable 12, as shown in Figure 2, and vice versa.

The control means comprise a system of detection of a situation of danger between an operator and the cutting tool 13, it being preferably capable of imparting an electrical signal on the tool and of detecting any changes to the electrical field during use of the machine, which can be caused by touching the blade of the cutting tool 13 by the operator, or even for example by an excessive level of humidity of the wood being processed or by contact with any electrically conducting material.

The supporting structure 14 comprises a kinematic mechanism for moving the cutting tool 13, with a linkage 16 for the connection of a supporting arm 17 of the cutting tool 13 with the actuator 15, the latter being integral with the frame 11 of the machine. The accompanying figures show the part of the frame 11 that supports the apparatus 10 and is adapted to be conveniently fixed to the rest of the structure.

The actuator 15 is of the type comprising a cylinder 18 and a piston 19, visible in the cross-sectional view, with a stem 20, which is adapted to slide inside the cylinder 18 from which it protrudes with the stem 20 in order to be coupled with its end to the linkage 16 of the kinematic mechanism.

In particular, as can clearly be seen in the perspective views, the actuator 15 is rendered integral with the frame 11 by way of the cylinder 18, the structure of which, with two chambers, a first low pressure chamber 21 and a second high pressure chamber 22, is associated with the frame 11 by way of adapted fixing means 23, for example screws, bolts, etc.

In the cross-sectional figure, two valves 24 are indicated between the two chambers.

According to the kinematic mechanism of the supporting structure 14, the supporting arm 17 consists substantially of a crank element, being pivoted on the frame 11 and coupled to the linkage 16, which in turn is coupled to the stem 20 of the actuator 15.

In particular, in the example shown, the supporting arm 17 is pivoted about a pivoting axis 25 at which a first pulley 26 is mounted. The latter substantially forms part of an assembly for transmitting rotation from an electric motor, not shown, to the cutting tool 13.

The electric motor can in fact be conveniently installed on the frame of the machine tool and connected to the first pulley 26, which is adapted to be turned by way of adapted entrainment means, in order to transmit the rotary motion to a second pulley 27, mounted on the rotation axis 28 of the cutting tool 13, by way of a belt 29.

The supporting arm 17 is coupled to one end of the linkage 16 at the axis of rotation 28 and substantially defines with its length the radius of rotation of the cutting tool 13 about the pivoting axis 25 in the transition from the operating configuration to the safe configuration and vice versa.

The other end of the linkage 16 is instead coupled to the stem 20, which by sliding in the cylinder 18 entrains the kinematic mechanism, thus producing the movement of the supporting arm 17 and therefore of the cutting tool 13.

The apparatus 10 also comprises means 30 for maintaining the cutting tool 13 in the operating configuration.

Such maintenance means 30 consist, as indicated in the cross-sectional figure, of a plate-like element 31 with an abutment protrusion 32 on which a resting element 33 rests which is substantially integral with the supporting arm 17, at the non-pivoted end of the latter. The plate-like element 31 is pushed toward the supporting arm 17 by way of two helical springs 34.

The resting element 33 comprises a cylindrical body that can rotate on its axis (clearly visible and indicated in Figure 2), in order to facilitate the surmounting of the abutment protrusion 32 in the event of transition from the operating configuration to the safe configuration.

The apparatus 10 also comprises decelerating means 35 for decelerating the retraction of the cutting tool 13 in the transition from the operating configuration to the safe configuration. These means comprise a safety decelerator, of the type with a piston with holes for the passage of the fluid activatable gradually during the operation, for example of the series known on the market with the model number SCS64 made by the ACE company. The supporting arm 17 is adapted to rest on the decelerator during its rotation, retracting the cutting tool 13 with respect to the worktable 12.

Operation of the apparatus according to the invention is the following.

In the safe configuration of the machine, the cutting tool 13 is positioned below the worktable 12 and the piston 19 of the actuator 15 is positioned at the bottom of the cylinder 18.

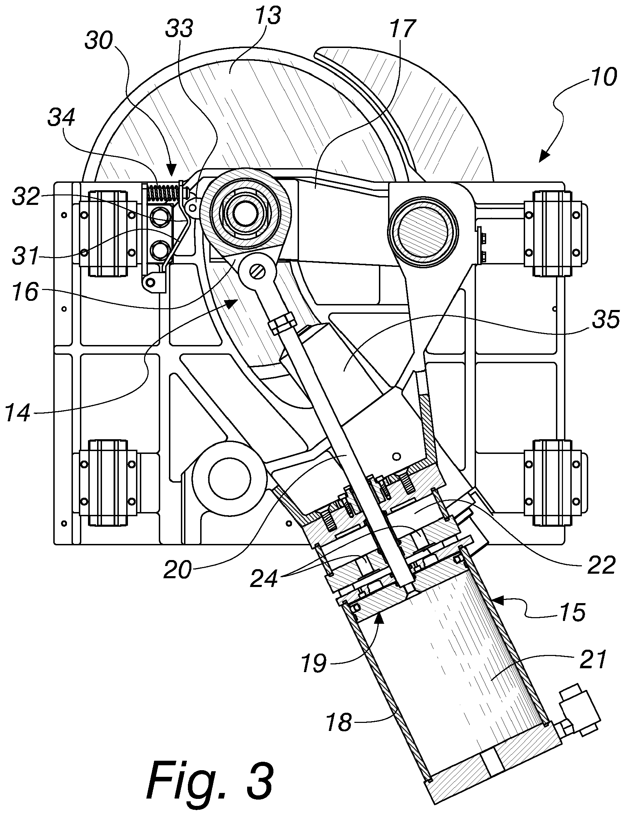

In order to bring the machine to the operating configuration, the piston 19 is brought to the opposite position to the previous one, as can be seen in the cross-section in Figure 3, by putting the first low pressure chamber 21 under pressure. This operation makes the stem 20 translate outside the cylinder 18, pushing in rotation, by way of the kinematic mechanism, the supporting arm 17 until the maintenance means 30 are engaged, owing to the surmounting of the abutment protrusion 32 by the resting element 33. The valves 24 are closed by powering internal coils and so isolating the second high pressure chamber 22, therefore constituting an accumulation tank. The second chamber 22 is brought under pressure, preferably, and for the purposes of example, between 14 bar and 15 bar.

In this operating configuration the machine operates usually in the cutting of wood until an event changes the electrical field that was generated previously.

As mentioned earlier, such modification arises for example when the body of the operator comes into contact with the cutting tool 13 (the blade), or when contact occurs with a wood component containing an excessive humidity or metallic fragments, or with any electrically conducting material.

Following such event, the control means cut the current to the valves 24 which instantly open, thus connecting the second chamber 22 with the first chamber 21. The piston 19 is therefore pushed toward the bottom of the cylinder 18 at a speed, for example, of 12 m/sec, entraining the stem 20 and therefore the linkage 16 and the supporting arm 17.

The latter, rotating, in turn entrains the cutting tool 13 with it, thus retracting it with respect to the worktable 12.

The initial acceleration guarantees that the cutting tool 13 is distanced from the operator.

In its rotation the supporting arm 17 intercepts the decelerating means 35 by resting on the decelerator which slows it until it stops before the piston 19 reaches the bottom of the cylinder 18. In slowing the supporting arm 17, the temperature of the oil contained in the decelerator rises. With this movement the piston 19 opens one or more rapid discharge valves located in the lower part of the cylinder 18, which enable the total drainage of the volume of the first chamber 21 in order to prevent the fluid contained in it from braking the translation of the piston 19 with the stem 20.

Once the oil contained in the decelerator has cooled, the actuator 15 is rearmed, retracing the steps described.

According to the invention, the position of the cylinder 18 of the actuator 15 is locked on the frame 11 of the machine and the linkage 16 between the supporting arm 17 and the stem 20 is included in the kinematic mechanism. It should be noted that this particular configuration makes it possible to combine the translation motion of the stem 20 and the rotary motion of the supporting arm 17 by way of the linkage 16, and to keep the cylinder 18 still, thus obtaining, with respect to conventional devices, a reduction of the operating pressure level and the elimination of the stresses on the cylinder owing to the oscillation.

In practice it has been found that the invention fully achieves the set aim and object by providing a safety apparatus for a cutting machine tool which is capable of ensuring adequate levels of safety by way of the lowering of the rotating blade, or in general of the cutting tool, in the event of contact with the body of the operator, with significant saving of energy and avoiding stresses to the cylinder which could compromise the functionality thereof over time.

The invention, thus conceived, is susceptible of numerous modifications and variations, all of which are within the scope of the appended claims.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A cutting machine tool comprising a frame (11) that supports a worktable (12) on which the pieces being machined are cut, a cutting tool (13) with its own supporting structure (14) coupled to said frame (11), and a safety apparatus (10) comprising an actuator (15) controlled by control means for moving said supporting structure (14), which is adapted to guide said cutting tool (13) from an operating configuration, for which it protrudes from said worktable, to a safe configuration by retracting it with respect to said worktable (12), and vice versa, said supporting structure (14) comprising a kinematic mechanism for moving said cutting tool (13), with at least one linkage (16) for the connection of a supporting arm (17) of said cutting tool (13) with said actuator (15), the latter being integral with the frame (11) of said machine, **characterized in that** the control means comprise a system of detection of a situation of danger between an operator and the cutting tool, the control means being configured to guide the cutting tool from the operating condition to the safe condition when said situation of danger is detected,
and **in that** it comprises means (35) for decelerating the retraction of said cutting tool (13) in the transition from said operating configuration to said safe configuration,
wherein said means (35) for decelerating the retraction comprise a safety decelerator, of the type with a piston with holes for the passage of the fluid activatable gradually during the operation, the supporting arm (17) being adapted to rest on said decelerator during its rotation, retracting the cutting tool (13) with respect to the worktable (12).

2. The apparatus according to claim 1, **characterized in that** said actuator (15) comprises a cylinder (18) and a piston (19) with a stem (20), which is adapted to slide inside said cylinder (18) from which said stem (20) protrudes in order to be coupled to said linkage (16) of said kinematic mechanism.

3. The apparatus according to claim 2, **characterized in that** said supporting arm (17) of said cutting tool (13) is pivoted on said frame (11) and is coupled to said linkage (16), which in turn is coupled to said stem (20) of said actuator (15).

4. The apparatus according to claim 1, **characterized in that** it comprises means (30) for maintaining said cutting tool (13) in the operating configuration.

## Patentansprüche

1. Eine schneidende Werkzeugmaschine, die einen Rahmen (11) umfasst, welcher einen Werktisch (12) trägt, auf dem die zu bearbeitenden Teile geschnitten werden, ein Schneidewerkzeug (13) mit seiner eigenen mit dem Rahmen (11) gekoppelten tragenden Struktur (14), und eine Sicherheitsvorrichtung (10), die ein Antriebselement (15) umfasst, das von Steuerungsmitteln zum Bewegen der tragenden Struktur (14) gesteuert und ausgebildet ist, um das Schneidewerkzeug (13) aus einer Arbeitskonfiguration, in welcher es von dem Werktisch vorsteht, durch Zurückziehen desselben mit Bezug auf den Werktisch (12) in eine sichere Konfiguration zu führen und umgekehrt; wobei die tragende Struktur (14) einen kinematischen Mechanismus zum Bewegen des Schneidewerkzeugs (13) umfasst, mit mindestens einem Verbindungselement (16) für die Verbindung eines Tragarms (17) des Schneidewerkzeugs (13) mit dem Antriebselement (15), wobei Letzteres integral mit dem Rahmen (11) der Maschine ist; **dadurch gekennzeichnet, dass** die Steuerungsmittel ein System zur Erkennung einer Gefahrensituation zwischen einem Bediener und dem Schneidewerkzeug umfassen, wobei die Steuerungsmittel konfiguriert sind, um das Schneidewerkzeug aus der Arbeitskonfiguration in die sichere Konfiguration zu führen, wenn die Gefahrensituation erkannt wird;
und dadurch, dass sie Mittel (35) zum Abbremsen des Zurückziehens des Schneidewerkzeugs (13) beim Übergang von der Arbeitskonfiguration in die sichere Konfiguration umfasst;
wobei die Mittel (35) zum Abbremsen des Zurückziehens einen Sicherheitsverzögerer von der Art mit einem Kolben mit Löchern für das Hindurchströmen des Fluids umfassen, der allmählich während des Betriebs aktivierbar ist, wobei der Tragarm (17) ausgebildet ist, um während seiner Drehung an dem Verzögerer anzuliegen und dabei das Schneidewerkzeug (13) von dem Werktisch (12) zurückzuziehen.

2. Die Vorrichtung gemäß Anspruch 1, **dadurch gekennzeichnet, dass** das Antriebselement (15) einen Zylinder (18) und einen Kolben (19) mit einem Schaft (20) umfasst, der ausgebildet ist, um in dem Zylinder (18) zu gleiten, aus welchem der Schaft (20) herausragt, um mit dem Verbindungselement (16) des kinematischen Mechanismus gekoppelt zu werden.

3. Die Vorrichtung gemäß Anspruch 2, **dadurch gekennzeichnet, dass** der Tragarm (17) des Schneidewerkzeugs (13) drehgelenkig mit dem Rahmen (11) verbunden und mit dem Verbindungselement (16) gekoppelt ist, welches wiederum mit dem Schaft (20) des Antriebselements (15) gekoppelt ist.

4. Die Vorrichtung gemäß Anspruch 1, **dadurch gekennzeichnet, dass** sie Mittel (30) zum Halten des Schneidewerkzeugs (13) in der Arbeitskonfiguration umfasst.

## Revendications

1. Machine-outil de coupe comprenant un bâti (11) qui supporte une table d'usinage (12) sur laquelle les pièces étant usinées sont découpées, un outil de coupe (13) avec sa propre structure de support (14) coupée audit bâti (11), et un dispositif de sécurité (10) comprenant un actionneur (15) commandé par des moyens de commande pour déplacer ladite structure de support (14), qui est adapté pour guider ledit outil de coupe (13) depuis une configuration d'utilisation, pour laquelle il fait saillie depuis ladite table d'usinage (12), et vice versa, ladite structure de support (14) comprenant un mécanisme cinématique pour déplacer ledit outil de coupe (13), avec au moins une biellette (16) pour la connexion d'un bras de support (17) dudit outil de coupe (13) avec ledit actionneur (15), ce dernier étant solidaire avec le bâti (11) de ladite machine, **caractérisée en ce que** les moyens de commande comprennent un système de détection d'une situation de danger entre un opérateur et l'outil de coupe, les moyens de commande étant configurés pour guider l'outil de coupe de l'état d'utilisation vers l'état de sécurité quand ladite situation de danger est détectée,
et **en ce qu'**il comprend des moyens (35) pour décélérer la rétraction dudit outil de coupe (13) dans la transition de ladite configuration d'utilisation vers ladite configuration de sécurité,
dans lequel lesdits moyens (35) pour décélérer la rétraction comprennent un décélérateur de sécurité, du type avec un piston avec trous pour le passage du fluide activable progressivement pendant le fonctionnement, le bras de support (17) étant adapté pour reposer sur ledit décélérateur pendant sa rotation, rétractant l'outil de coupe (13) par rapport à la table d'usinage (12).

2. Dispositif selon la revendication 1, **caractérisé en ce que** ledit actionneur (15) comprend un cylindre (18) et un piston (19) avec une tige (20), qui est adapté pour coulisser à l'intérieur dudit cylindre (18) depuis lequel ladite tige (20) fait saillie afin d'être couplée à ladite biellette (16) dudit mécanisme cinématique.

3. Dispositif selon la revendication 2, **caractérisé en ce que** ledit bras de support (17) dudit outil de coupe (13) est pivoté sur ledit bâti (11) et est couplé à ladite biellette (16), qui à son tour est couplée à ladite tige (20) dudit actionneur (15).

4. Dispositif selon la revendication 1, **caractérisé en ce qu'**il comprend des moyens (30) pour maintenir ledit outil de coupe (13) dans la configuration de fonctionnement.
